# EUROPEAN PATENT SPECIFICATION

(11) **EP 4 579 109 B1**
(45) Date of publication and mention of the grant of the patent: **08.04.2026**
(21) Application number: 24209475.3
(22) Date of filing: 29.10.2024
(51) Int. Cl.: F16K 1/44, F16K 31/04, F16K 31/50, F16K 31/53, F25B 41/35, H02K 7/06, H02K 7/116

(54) **ELECTRICALLY DRIVEN VALVE**
ELEKTRISCH ANGETRIEBENES VENTIL
SOUPAPE À COMMANDE ÉLECTRIQUE

(30) Priority: 26.12.2023 JP 2023219060
(43) Date of publication of application: 02.07.2025
(73) Proprietor: Fujikoki Corporation, Tokyo 158-0082 (JP)
(72) Inventor: AIHARA, Hiroki, Tokyo, 1580082 (JP); OE, Yuma, Tokyo, 1580082 (JP); MINATO, Yusuke, Tokyo, 1580082 (JP); HORI, Ryota, Tokyo, 1580082 (JP); OSHIKA, Shinichiro, Tokyo, 1580082 (JP); SOUMA, Hikaru, Tokyo, 1580082 (JP); SHINYA, Yuto, Tokyo, 1580082 (JP)
(74) Representative: Ter Meer Steinmeister & Partner

(56) References cited:
- CN-A- 114 909 483
- JP-A- 2022 069 831

## Description

### BACKGROUND OF THE INVENTION

### Field of the Invention

The present invention relates to an electrically driven valve.

### Description of the Related Art

Heretofore, electrically driven valves have been assembled in midway of piping systems for fluid, for example, and used to open or close a flow path of fluid or to control the flow rate thereof. For example, in an electrically driven valve as disclosed in Japanese Patent Application Laid-Open Publication No. 2023-155785, a highly accurate flow rate control and airtightness during closing of valve are realized using a planetary gear reduction mechanism to increase a torque of a stepping motor attached to a valve main body and to transmit the same to a valve element.

In the electrically driven valve disclosed in Japanese Patent Application Laid-Open Publication No. 2023-155785, the operation to open and close the valve is realized by moving a valve element made of metal to be in contact with or away from a valve seat made of metal. Therefore, if the valve is closed in a state where a foreign matter is interposed between the valve seat and the valve element, the foreign matter will be jammed therebetween, leaving an indentation on a sealing surface of the valve seat or the valve element, which may cause fluid leakage when the valve is closed.

As a countermeasure against this problem, it may be possible to form either one of the valve seat or the valve element of rubber, but if the material of either one these members is changed to rubber, the member may experience fatigue, i.e., volume reduction, due to heat or aging, and the gap between the valve seat and the valve element when the valve is opened may change, such that the flow rate control of fluid may be influenced, or that the flow rate control may become difficult.

The present invention aims at solving the problems described above, and provides an electrically driven valve that may realize a highly accurate flow rate control while suppressing fluid leakage during closing of the valve.

CN 114909483 A discloses an electronic expansion valve, comprising a valve body, the inside of the valve body having a flow channel, an adjustment hole being arranged in the flow channel, and a seal that is arranged on the top of the adjustment hole face. A valve core assembly includes a cylinder body, a conical adjustment part arranged at the bottom of the cylinder body, and a sealing part arranged on the outer peripheral side of the cylinder body. The sealing portion includes a ring body and a sealing ring, wherein the ring body is sleeved on the outer peripheral side of the column body, and the bottom of the ring body is provided with a sealing groove. The sealing ring is disposed in the sealing groove.

JP 2022 069831 A discloses another known double-seat electrically driven valve.

### SUMMARY OF THE INVENTION

The electrically driven valve according to the present invention includes:
a valve main body including a valve chamber that is configured to store a valve element unit and that is equipped with a valve seat;
a can connected to the valve main body;
a rotor of a motor that is driven to rotate; and
a conversion mechanism configured to displace a driving portion in an axial direction according to a rotation angle of the rotor,
wherein the valve element unit includes a valve shaft connected to the driving portion, and a valve element portion that is relatively movable in the axial direction with respect to the valve shaft and that comes into contact with or moves away from the valve seat, and
wherein an elastic body is arranged on the valve shaft so as to surround a circumference of the valve seat, and a contact portion that comes into contact with or moves away from the elastic body is arranged on the valve main body.

According to the present invention, an electrically driven valve that may realize a highly accurate flow rate control while suppressing fluid leakage during closing of the valve is provided.

### BRIEF DESCRIPTION OF THE DRAWINGS

FIG. 1 is a vertical cross-sectional view illustrating a valve closed state of an electrically driven valve according to a first embodiment.
FIG. 2 is a view illustrating a periphery of a valve seat of the electrically driven valve in a valve completely closed range.
FIG. 3 is a view illustrating a periphery of the valve seat of the electrically driven valve in a boundary range.
FIG. 4 is a view illustrating a periphery of the valve seat of the electrically driven valve in a flow rate control range.
FIG. 5 is a flow rate characteristic diagram of the electrically driven valve according to the first embodiment.
FIG. 6 is a view illustrating a periphery of a valve seat of an electrically driven valve according to a second embodiment, not being part of the claimed invention, in a valve completely closed range.

### DETAILED DESCRIPTION OF THE PREFERRED EMBODIMENTS

Embodiments of an electrically driven valve according to the present invention will be described below with reference to the drawings. In the present specification, a rotor side is referred to as an upper side, and a valve element side is referred to as a lower side. A mechanical paradox planetary gear reduction mechanism is one type of a planetary gear reduction mechanism.

### [First Embodiment]

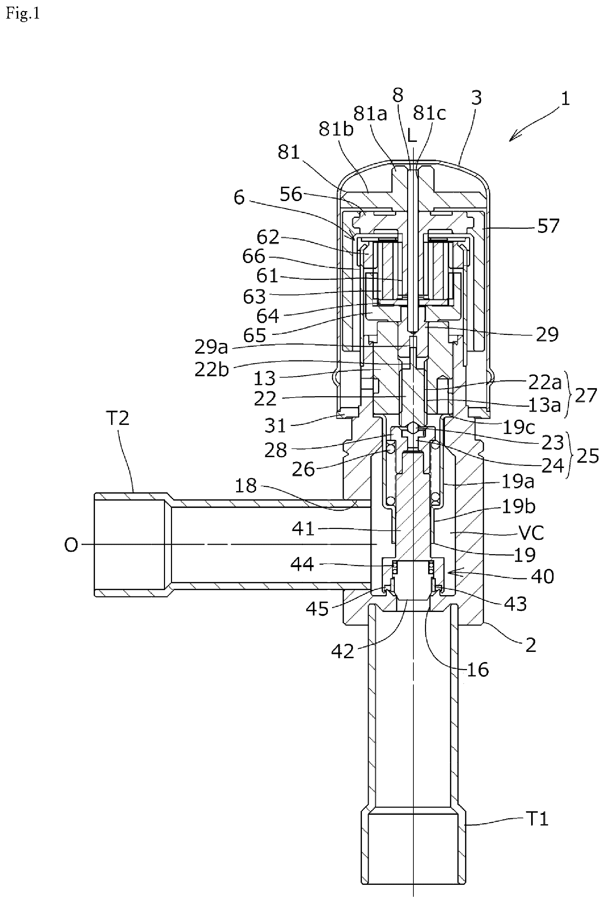

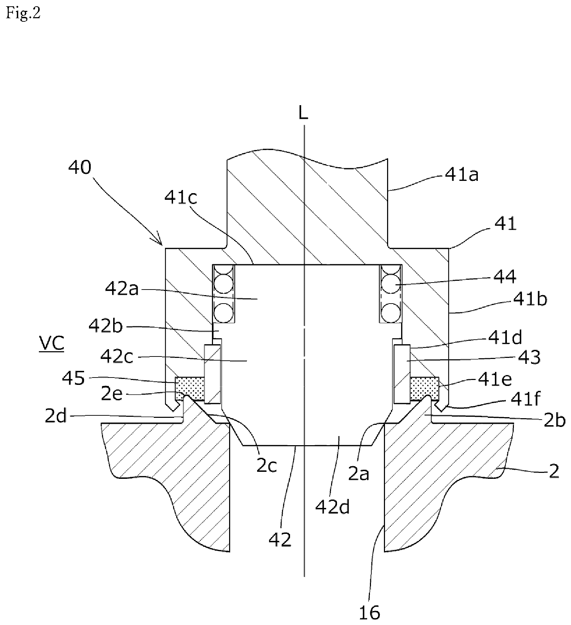

FIG. 1 is a vertical cross-sectional view illustrating a valve closed state of an electrically driven valve 1 according to a first embodiment of the present invention, and FIGs. 2 to 4 are cross-sectional views illustrating in enlarged view a periphery of a valve seat of the electrically driven valve 1 according to the first embodiment. The electrically driven valve 1 according to the present embodiment is used, for example, to adjust a refrigerant flow rate in a refrigeration cycle. An axis of the electrically driven valve 1 is referred to as L.

The electrically driven valve 1 according to the present embodiment is composed of a valve main body 2 having a valve seat 2a formed in an interior of a valve chamber VC, a can 3 made of metal having a cylindrical shape with a top that is fixed to the valve main body 2 via an annular body 31, a stepping motor composed of a stator (not shown) mounted to an outer side of the can 3 and a rotor 57 disposed on an inner side of the can 3, a reduction mechanism 6 that reduces a rotational torque of the rotor 57 and transmits the same, a valve element unit 40 that is arranged within the valve chamber VC, and that comes into contact with or moves away from the valve seat 2a to control a passage amount of fluid, and a screw driving member, i.e., driving portion, 22 that converts a rotary motion of an output gear of the reduction mechanism 6 through a screw feeding mechanism, i.e., conversion mechanism, 27 into a rectilinear motion, and drives the valve element unit 40.

The valve main body 2 has a valve port 16 that is communicated with the valve chamber VC formed along an axis L, wherein a first piping T1 is connected by brazing or the like to the valve port 16 side of the valve main body 2, and a second piping T2 is connected by brazing or the like to be communicated with an opening 18 formed to a side surface of the valve chamber VC. An axis of the second piping T2 is referred to as O. The axis O is orthogonal to the axis L.

Further, a screw bearing member 13 having a female screw portion 13a formed on a lower end side at a center thereof, is inserted to an upper portion of the valve chamber VC of the valve main body 2, and it is fixed to the valve main body 2, by press-fitting or the like.

A shaft support portion 81 made of resin is attached to an inner side at an upper end of the can 3. More specifically, the shaft support portion 81 is formed by consecutively connecting a cylindrical portion 81a having an upper end surface thereof in contact with a lower surface of the can 3 with a flange portion 81b that is arranged on a circumference of the cylindrical portion 81a and that has an outer circumference thereof in contact with an inner circumference of the can 3. A through hole 81c that is formed to pass through in an up-down direction is formed coaxially with the axis L at a center of the shaft support portion 81. An inner diameter of the through hole 81c is approximately equivalent to an outer diameter of a support shaft 8.

The reduction mechanism 6 includes, on an inner circumference side of the rotor 57, a sun gear 61 that is formed integrally with a rotor support member 56, a fixing ring gear 62 fixed via a thin tubular body 66 that is firmly fixed to an upper portion of the valve main body 2 and that extends upward, planetary gears 63 that are arranged between the sun gear 61 and the fixing ring gear 62 and that mesh respectively therewith, a carrier 64 that supports the planetary gears 63 in a rotatable manner, and an output gear member 65 having a tubular shape with a bottom having teeth that mesh with the planetary gears 63 disposed on an inner circumference thereof, by which a mechanical paradox planetary gear reduction mechanism is composed. A number of teeth of the fixing ring gear 62 is set to differ from a number of teeth of the output gear member 65.

The support shaft 8 made of metal passes through the rotor support member 56 and the sun gear 61, and is retained in a manner rotatable therewith. An upper end of the support shaft 8 fits to the through hole 81c of the shaft support portion 81 attached to the can 3, and is supported in a manner movable in the rotational direction and the axis L direction.

An upper portion of an output shaft portion 29 having a stepped cylindrical shape formed on an upper portion of the screw driving member 22, is press-fit to a center of a bottom portion of the output gear member 65. A lower end of the support shaft 8 is fit by press-fitting to an upper opening of the output shaft portion 29, and the output gear member 65, the support shaft 8, and the output shaft portion 29 are configured to rotate integrally.

A male screw portion 22a formed on a lower portion of the screw driving member 22, is screwed onto the female screw portion 13a of the screw bearing member 13. A rotary motion of the output gear member 65, that is, the rotor 57, is converted into a rectilinear motion along the axis L by a screw feeding mechanism, i.e., conversion mechanism, 27 composed of the male screw portion 22a and the female screw portion 13a.

A slit 29a is formed on a lower end of the output shaft portion 29, and a blade 22b protruding along the axis L is formed on an upper end of the screw driving member 22, wherein the slit 29a and the blade 22b are engaged such that they may move in sliding motion against each other. Thereby, the output shaft portion 29 is connected to the screw driving member 22 in an integrally rotatable manner, such that when the output gear member 65, i.e., the rotor 57, rotates, the output shaft portion 29 and the screw driving member 22 rotate integrally, and they are also relatively movable in linear motion along the axis L.

When the output gear member 65, i.e., the rotor 57, rotates, the output gear member 65 and the screw driving member 22 rotate integrally, and they also move in rectilinear motion along the axis L with respect to the valve main body 2. Along with the lifting and lowering of the output gear member 65, the carrier 64 and the planetary gears 63 placed on a bottom surface of the output gear member 65 are also lifted and lowered integrally with the support shaft 8.

A lower end of a ball-shaped joint 25 composed of a ball 23 and a ball seat 24 is in contact with an upper end of a spring supporting member 28 having a hollow cylindrical shape that is press-fit coaxially to an upper end of a valve shaft 41 of the valve element unit 40. A spring case 19 having a tubular shape arranged in the circumference of the valve element unit 40 and the spring supporting member 28, is composed by consecutively connecting a diameter expansion portion 19a, a diameter reduction portion 19b, and an upper end flange portion 19c that extends outward in a radial direction from the upper end of the diameter expansion portion 19a. The upper end flange portion 19c is engaged to an inner-circumference stepped portion of the valve main body 2, and fixed and supported by the screw bearing member 13. The diameter reduction portion 19b retains the outer circumference of the valve shaft 41 of the valve element unit 40 in a slidable manner.

A compression coil spring 26 is arranged in a compressed state by having its lower end in contact with a stepped portion between the diameter expansion portion 19a and the diameter reduction portion 19b and having its upper end engaged with the spring supporting member 28, according to which the valve element unit 40 is urged constantly toward a valve opening direction.

The rectilinear motion of the screw driving member 22 is transmitted via the ball-shaped joint 25 and the spring supporting member 28 to the valve element unit 40 having an axial shape, and thereby, the valve element unit 40 is guided by the spring case 19 to move in the axis L direction.

The valve element unit 40 is composed of the valve shaft 41 made of metal and a valve element portion 42 made of metal. The valve shaft 41 includes a small diameter portion 41a, and a large diameter portion 41b having a greater diameter than the small diameter portion 41a, which are arranged coaxially. An upper end of the small diameter portion 41a is fit by press-fitting to an inner circumference of the spring supporting member 28, and an outer circumference of the small diameter portion 41a is fit slidably to an inner circumference of the diameter reduction portion 19b. A recess portion 41c having a cylindrical shape is formed at a lower end, i.e., surface facing the valve seat 2a, of the large diameter portion 41b.

In FIGs. 2 to 4, a first inner circumference portion 41d that is expanded in diameter and a second inner circumference portion 41e having a greater diameter than the first inner circumference portion 41d, are formed at a lower end side of the recess portion 41c, and a thin circumference wall of the second inner circumference portion 41e constitutes a crimping portion 41f.

The valve element portion 42 having an approximately cylindrical shape includes a first cylindrical portion 42a having an outer diameter that is smaller than the inner diameter of the recess portion 41c, a flange portion 42b having an outer diameter that is approximately equivalent to the inner diameter of the recess portion 41c, a second cylindrical portion 42c having an outer diameter that is greater than the outer diameter of the first cylindrical portion 42a, and a tapered portion 42d having a truncated cone shape that shrinks in diameter toward the downward direction, which are arranged coaxially.

A coil spring 44 is arranged between the inner circumference of the recess portion 41c and the first cylindrical portion 42a such that an upper end thereof is in contact with a bottom surface of the recess portion 41c and a lower end thereof is in contact with an upper surface of the flange portion 42b. The coil spring 44 urges the valve element portion 42 downward against the bottom surface of the recess portion 41c.

A retaining member 43 having a thin cylindrical shape is fit by press-fitting to the first inner circumference portion 41d. A gap is formed between the inner circumference of the retaining member 43 and the second cylindrical portion 42c of the valve element portion 42.

In a state where the upper end of the retaining member 43 is in contact with a stepped portion of the first inner circumference portion 41d and the second inner circumference portion 41e, an annular space is formed between an outer circumference of the retaining member 43 and an inner circumference of the second inner circumference portion 41e, and an elastic body 45 having an annular shape and formed of rubber or resin is disposed in this space. By elastically deforming when disposed in this space, the elastic body 45 comes into close contact with the outer circumference of the retaining member 43 and the inner circumference of the second inner circumference portion 41e. Materials such as HNBR and PTFE may be used to form the elastic body 45, but the materials are not limited thereto.

Before assembling the valve element unit 40, the crimping portion 41f of the valve shaft 41 has a cylindrical shape. Upon assembly, the coil spring 44 is arranged around the first cylindrical portion 42a of the valve element portion 42, and while maintaining this state, the valve element portion 42 is pushed in toward the recess portion 41c of the valve shaft 41, and the retaining member 43 is further attached by press-fitting to the first inner circumference portion 41d. Thereafter, the elastic body 45 is arranged between the outer circumference of the retaining member 43 and the inner circumference of the second inner circumference portion 41e, and the lower end of the crimping portion 41f is elastically deformed toward the inner side in the radial direction, by which the valve element unit 40 is assembled. Alternatively, the elastic body 45 may be attached to the valve shaft 41 using an adhesive.

The valve main body 2 made of metal has the valve seat 2a having an edge shape disposed at an intersecting portion between the bottom surface of the valve chamber VC and the valve port 16. The tapered portion 42d of the valve element portion 42 is enabled to be seated on an entire circumference of the valve seat 2a.

Furter, the valve main body 2 includes a projection portion, i.e., contact portion, 2b having an annular shape that is arranged to surround the circumference of the valve seat 2a and that protrudes upward from the bottom surface of the valve chamber VC. The projection portion 2b includes a tapered inner circumference surface 2c that expands in diameter toward the upward direction, and an outer circumference surface 2d having a cylindrical shape, and wherein an upper end 2e having a radial-diameter width thereof narrowed is made to come into contact at the entire circumference with the elastic body 45 at an outer side in the radial direction, i.e., the valve chamber VC side, of the valve seat 2a.

### (Operation of Electrically Driven Valve)

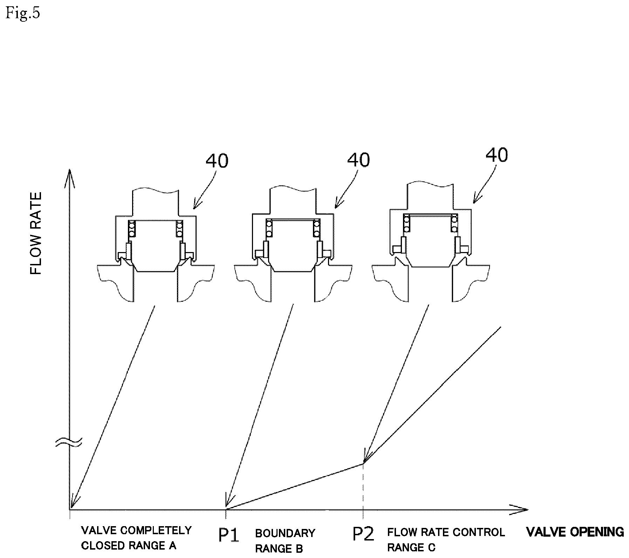

FIG. 5 is a flow rate characteristic diagram of the electrically driven valve according to the present embodiment, wherein a vertical axis of the graph indicates the flow rate, and a horizontal axis thereof indicates the valve opening, i.e., axial direction position of the valve shaft 41, wherein the scale of the vertical axis may differ from the actual scale. Further, according to the flow rate characteristic diagram of FIG. 5, a schematic diagram illustrating the relative positional relationship between the valve element portion 42 and the valve seat 2a will also be illustrated. In the present embodiment, the second piping T2 side serves as a high pressure side, and the first piping T1 side serves as a low pressure side, but alternatively, the second piping T2 side may serve as the low pressure side and the first piping T1 side may serve as the high pressure side.

In the state illustrated in FIG. 2, the valve shaft 41 of the valve element unit 40 is at the lowest position, and with the coil spring 44 in the compressed state, the bottom surface of the recess portion 41c is in contact with the upper end of the valve element portion 42. Therefore, by the downward pressing force applied from the valve shaft 41, the outer circumference surface of the tapered portion 42d is seated on the valve seat 2a, and the upper end 2e of the projection portion 2b comes into contact with the lower surface of the elastic body 45. A gap is formed between the lower surface of the flange portion 42b of the valve element portion 42 and the upper end of the retaining member 43.

In this state, the lower surface of the elastic body 45 elastically deforms moderately, such that regardless of component accuracy, a state in which the upper end 2e of the projection portion 2b is in contact with the lower surface of the elastic body 45, may be maintained in a state where the outer circumference surface of the tapered portion 42 is seated on the valve seat 2a.

When the valve element portion 42 made of metal is seated on the valve seat 2a made of metal, a slight gap may be formed therebetween, which may cause fluid leakage. According to the present embodiment, even if a slight gap is formed in the valve closed state, between the valve element portion 42 and the valve seat 2a, a state in which the upper end 2e of the projection portion 2b is in contact with the lower surface of the elastic body 45 is maintained, such that fluid will not flow from the interior of the valve chamber VC toward the valve seat 2a. Such a state is referred to as a valve completely closed range A illustrated in FIG. 5.

In the valve completely closed range A, fluid is prevented from flowing from the valve chamber VC toward the valve port 16. Therefore, movement of fluid between the second piping T2 and the first piping T1 will be limited.

By driving the rotor 57 of the stepping motor to rotate by supplying power to the stator from the valve completely closed range A, the rotational torque of the rotor 57 is transmitted via the rotor support member 56 to the sun gear 61 of the reduction mechanism 6, and a rotational torque that has been reduced by a predetermined reduction ratio is output from the output gear member 65. The rotational torque of the output gear member 65 is transmitted to the output shaft portion 29.

Rotary motion of the output shaft portion 29 is converted by the screw feeding mechanism 27 into rectilinear motion, and thereby, the output shaft portion 29 is lifted in the axial direction together with the valve shaft 41 of the valve element unit 40. By the lifting of the valve shaft 41, the elastic body 45 is also lifted, but as the elastic body 45 lifts, the contact portion thereof to the upper end 2e of the projection portion 2b returns from the elastically deformed state. However, while the state of contact with the upper end 2e is maintained, fluid is prevented from flowing from the valve chamber VC toward the valve port 16.

By the lifting of the valve shaft 41, the lower end of the valve element portion 42 separates from the bottom surface of the recess portion 41c, but since the valve element portion 42 is pressed downward toward the valve shaft 41 by the coil spring 44, the seated state of the valve element portion 42 and the valve seat 2a is maintained.

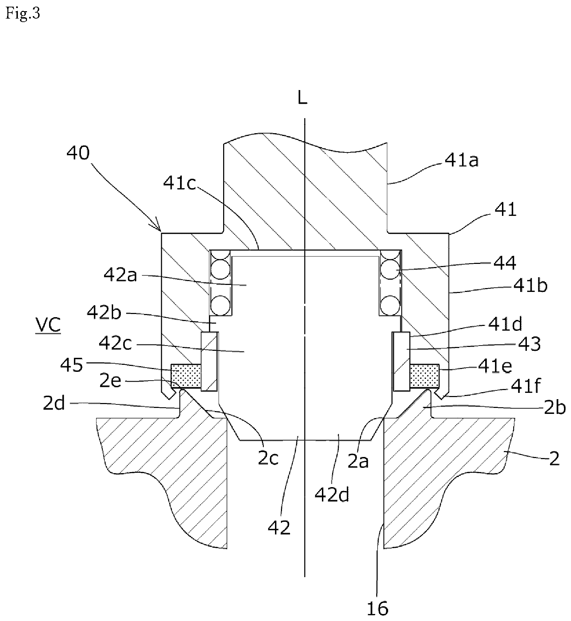

When the valve shaft 41 is lifted to a first position P1, as illustrated in FIG. 3, a lower surface of the elastic body 45 separates from the upper end 2e of the projection portion 2b, and the valve completely closed range A is ended. Thereby, the fluid within the valve chamber VC may move past the projection portion 2b and toward the valve seat 2a, but due to the pressing force of the coil spring 44, the seated state between the valve element portion 42 and the valve seat 2a is maintained.

In this state, if there is a slight gap between the valve element portion 42 and the valve seat 2a, fluid is flown through the gap from the valve chamber VC side toward the valve port 16, but the amount thereof is very little. This state is referred to as a boundary range B.

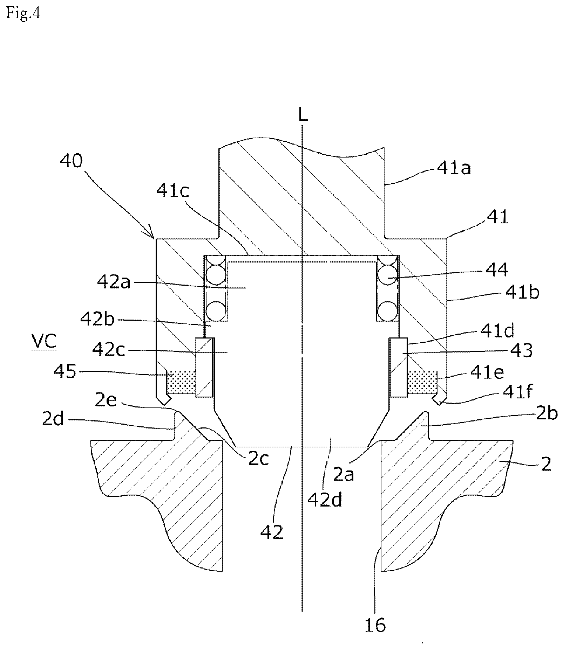

When the valve shaft 41 is lifted further, and the lower surface of the flange portion 42b of the valve element portion 42 comes into contact with the upper end of the retaining member 43, the valve element portion 42 is lifted together with the valve shaft 41. When the valve shaft 41 is lifted to a second position P2, the valve element portion 42 separates from the valve seat 2a so that the boundary range B is ended, and a flow rate control range C is started. In the flow rate control range C illustrated in FIG. 4, fluid is flown from the valve chamber VC toward the valve port 16 by a flow rate corresponding to a gap formed between the valve element portion 42 and the valve seat 2a that is determined by the axial direction position of the valve shaft 41. Therefore, movement of fluid by a predetermined flow rate between the second piping T2 and the first piping T2 is permitted.

By supplying power with a reverse characteristic to the stator in the valve opened state, the rotor 57 rotates in an opposite direction, the valve shaft 41 is lowered by a reverse operation as described above, the valve element portion 42 is seated on the valve seat 2a, and thereafter, the upper end 2e of the projection portion 2b comes into contact with the lower surface of the elastic body 45, such that the valve completely closed range A may be returned.

According to the present embodiment, by having the valve element portion 42 seated on the valve seat 2a and then having the bottom surface of the recess portion 41c come into contact with the upper end of the valve element portion 42, excessive deformation of the elastic body 45 with which the upper end 2e of the projection portion 2b comes into contact may be prevented, such that fatigue of the elastic body 45 may be suppressed, and the valve completely closed range A may be ensured stably for a long period of time. Further, even if the elastic body 45 is deformed by aging or the like, for example, flow of fluid may still be blocked as long as the elastic body 45 deforms elastically when the projection portion 2b comes into contact therewith.

Further, if foreign matter is mixed in the fluid, jamming may occur between the upper end 2e of the projection portion 2b and the elastic body 45. In that case, since the elastic body 45 elastically deforms, fluid leakage may be prevented even if such a foreign matter is jammed between the upper end 2e and the elastic body 45. Further, since the foreign matter is washed away by fluid when the upper end 2e and the elastic body 45 are separated, foreign matter may be prevented from staying at the same place. Therefore, it may be possible to provide the electrically driven valve 1 that may suppress fluid leakage during closing of valve while realizing a highly accurate flow rate control.

### (Second Embodiment)

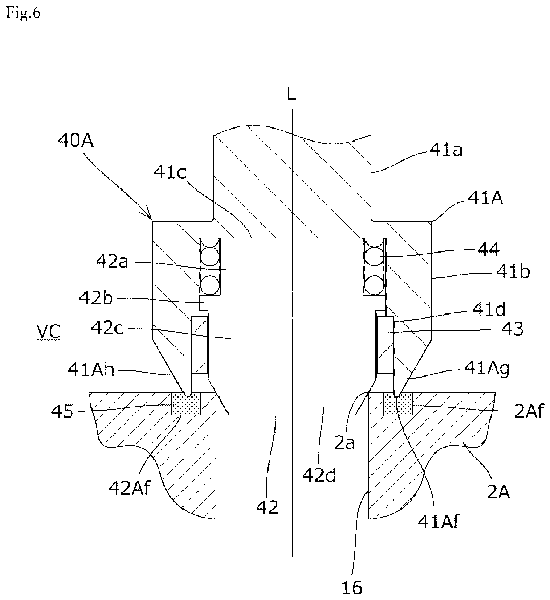

FIG. 6 is a view similar to FIG. 2, illustrating a valve closed state of an electrically driven valve according to a modified example of a second embodiment which is not part of the claimed invention. In the present embodiment, the configurations of a valve shaft 41A of a valve element unit 40A and a valve main body 2A differ, and other configurations are similar to the embodiment described above, such that detailed descriptions of similar configurations are omitted.

The valve shaft 41A according to the present embodiment includes a projection portion 41Ag having an annular shape at a lower end thereof. An inner circumference surface of the projection portion 41Ag is configured by having the first inner circumference portion 41d to which the retaining member 43 is press-fit extended to the lower end, an outer circumference surface of the projection portion 41Ag is a tapered outer circumference surface 41Ah that shrinks in diameter toward the downward direction from a vicinity of the lower end, and the projection portion 41Ag includes a lower end 41Af having an annular shape.

The valve main body 2A includes an annular groove 2Af at a bottom surface of the valve chamber VC in the circumference of the valve seat 2a. The elastic body 45 is arranged within the annular groove 2Af.

According to the present embodiment, similar to the aforementioned embodiment, in the valve completely closed range A, the outer circumference surface of the tapered portion 42d is seated on the valve seat 2a, and the lower end 41Af of the projection portion 41Ag contacts an upper surface of the elastic body 45.

Meanwhile, when the valve shaft 41A is lifted to the first position P1 (refer to FIG. 5), the lower end 41Af of the projection portion 41Ag separates from the upper surface of the elastic body 45, by which the valve completely closed range A ends, and the boundary range B starts. In the boundary range B, the fluid within the valve chamber VC may flow past the projection portion 41Ag toward the valve seat 2a, but due to the pressing force applied by the coil spring 44, the seated state between a valve element portion 42 and the valve seat 2a is maintained.

Further, when the valve shaft 41A is lifted and reaches the second position P2 (refer to FIG. 5), the valve element portion 42 separates from the valve seat 2a, by which the boundary range B ends, and the flow rate control range C starts. In the flow rate control range C, fluid flows from the valve chamber VC toward the valve port 16 according to a flow rate corresponding to the gap between the valve element portion 42 and the valve seat 2a. Therefore, movement of fluid by a predetermined flow rate between the second piping T2 and the first piping T1 is permitted.

The present invention is not limited to the embodiments described above. Various modifications of arbitrary components of the above-described embodiments are possible. Further, arbitrary components may be added to or deleted from the above-described embodiments. For example, a reduction mechanism composed of a gear set may be disposed instead of the planetary gear reduction mechanism. Further, the present invention is also applicable to an electrically driven valve without a reduction mechanism.

## Claims

1. An electrically driven valve (1) comprising:
a valve main body (2) including a valve chamber (VC) that is configured to store a valve element unit (40) and that is equipped with a valve seat (2a);
a can (3) connected to the valve main body (2);
a rotor (57) of a motor that is driven to rotate; and
a conversion mechanism configured to displace a driving portion in an axial direction according to a rotation angle of the rotor,
wherein the valve element unit (40) includes a valve shaft (41) connected to the driving portion, and a valve element portion (42) that is relatively movable in the axial direction with respect to the valve shaft (41) and that comes into contact with or moves away from the valve seat (2a), and
wherein an elastic body (45) having an annular shape is arranged so as to surround a circumference of the valve seat (2a), and a contact portion that comes into contact with or moves away from the elastic body (45) is arranged on the valve main body (2),
wherein the valve element portion (42) is arranged within a recess portion (41c) facing the valve seat side of the valve shaft (41),
**characterized in that** a retaining member (43) configured to prevent the valve element portion (42) from being withdrawn from within the recess portion (41c) is disposed in the recess portion (41c),
and a first inner circumference portion (41d) that is expanded in diameter and a second inner circumference portion (41e) having a greater diameter than the first inner circumference portion (41d) are formed at a lower end side of the recess portion (41c),
wherein the elastic body (45) is disposed on the valve shaft (41) in an annular space formed between an outer circumference of the retaining member (43) and an inner circumference of the second inner circumference portion (41e).

2. The electrically driven valve according to claim 1,
wherein a projection portion (2) having an annular shape serving as the contact portion is formed on the valve main body (2).

3. The electrically driven valve according to claim 1, further comprising
a coil spring (44) configured to urge the valve element portion (42) to a direction toward the valve seat (2a) with respect to the valve shaft (41).

4. The electrically driven valve (1) according to claim 1,
wherein, in a state where the valve shaft (41) moves to a direction separating from the valve seat (2a), the valve element portion (42) separates from the valve seat (2a) after the elastic body (45) has been separated from the contact portion.

5. The electrically driven valve (1) according to claim 4,
wherein, after the valve element portion (42) has been separated from the valve seat (2a), fluid flowing through a gap formed between the valve element portion (42) and the valve seat (2a) is controlled according to an axial direction position of the valve shaft (41).

## Patentansprüche

1. Elektrisch angetriebenes Ventil (1), umfassend:
einen Ventilhauptkörper (2), der eine Ventilkammer (VC) beinhaltet, die konfiguriert ist, um eine Ventilelementeinheit (40) zu speichern, und die mit einem Ventilsitz (2a) ausgestattet ist;
ein Gehäuse (3), das mit dem Ventilhauptkörper (2) verbunden ist; einen Rotor (57) eines Motors, der zur Drehung angetrieben wird; und
einen Umwandlungsmechanismus, der konfiguriert ist, um einen Antriebsabschnitt in einer axialen Richtung gemäß einem Drehwinkel des Rotors zu verschieben,
wobei die Ventilelementeinheit (40) eine Ventilwelle (41), die mit dem Antriebsabschnitt verbunden ist, und einen Ventilelementabschnitt (42) beinhaltet, der in der axialen Richtung in Bezug auf die Ventilwelle (41) relativ beweglich ist und der mit dem Ventilsitz (2a) in Kontakt kommt oder sich von diesem weg bewegt, und
wobei ein elastischer Körper (45), der eine Ringform aufweist, so angeordnet ist, dass er einen Umfang des Ventilsitzes (2a) umgibt, und ein Kontaktabschnitt, der mit dem elastischen Körper (45) in Kontakt kommt oder sich von diesem weg bewegt, an dem Ventilhauptkörper (2) angeordnet ist,
wobei der Ventilelementabschnitt (42) innerhalb eines Aussparungsabschnitts (41c), der der Ventilsitzseite der Ventilwelle (41) zugewandt ist, angeordnet ist,
**dadurch gekennzeichnet, dass**
ein Halteelement (43), das konfiguriert ist, um zu verhindern, dass der Ventilelementabschnitt (42) aus dem Aussparungsabschnitt (41c) herausgezogen wird, in dem Aussparungsabschnitt (41c) angeordnet ist,
und ein erster Innenumfangsabschnitt (41d), der im Durchmesser erweitert ist, und ein zweiter Innenumfangsabschnitt (41e), der einen größeren Durchmesser als der erste Innenumfangsabschnitt (41d) aufweist, an einer unteren Endseite des Aussparungsabschnitts (41c) ausgebildet sind,
wobei der elastische Körper (45) an der Ventilwelle (41) in einem ringförmigen Raum angeordnet ist, der zwischen einem Außenumfang des Halteelements (43) und einem Innenumfang des zweiten Innenumfangsabschnitts (41e) ausgebildet ist.

2. Elektrisch angetriebenes Ventil nach Anspruch 1,
wobei ein Vorsprungsabschnitt (2), der eine Ringform aufweist, die als der Kontaktabschnitt dient, an dem Ventilhauptkörper (2) ausgebildet ist.

3. Elektrisch angetriebenes Ventil nach Anspruch 1, ferner umfassend
eine Schraubenfeder (44), die konfiguriert ist, um den Ventilelementabschnitt (42) in eine Richtung zu dem Ventilsitz (2a) in Bezug auf die Ventilwelle (41) zu drängen.

4. Elektrisch angetriebenes Ventil (1) nach Anspruch 1,
wobei in einem Zustand, in dem sich die Ventilwelle (41) in eine Richtung bewegt, in der sie sich von dem Ventilsitz (2a) trennt, der Ventilelementabschnitt (42) sich von dem Ventilsitz (2a) trennt, nachdem der elastische Körper (45) von dem Kontaktabschnitt getrennt wurde.

5. Elektrisch angetriebenes Ventil (1) nach Anspruch 4,
wobei, nachdem der Ventilelementabschnitt (42) von dem Ventilsitz (2a) getrennt wurde, ein Fluidstrom durch einen Spalt, der zwischen dem Ventilelementabschnitt (42) und dem Ventilsitz (2a) gebildet ist, gemäß einer axialen Richtungsposition der Ventilwelle (41) gesteuert wird.

## Revendications

1. Soupape à commande électrique (1) comportant :
un corps principal de soupape (2) incluant une chambre de soupape (VC) qui est configurée pour stocker une unité d'élément de soupape (40) et qui est équipée d'un siège de soupape (2a) ;
un boîtier (3) relié au corps principal de soupape (2) ;
un rotor (57) d'un moteur qui est entraîné en rotation ; et
un mécanisme de conversion configuré pour déplacer une partie d'entraînement dans une direction axiale en fonction d'un angle de rotation du rotor,
dans laquelle l'unité d'élément de soupape (40) inclut une tige de soupape (41) reliée à la partie d'entraînement, et une partie d'élément de soupape (42) qui est mobile de manière relative dans la direction axiale par rapport à la tige de soupape (41) et qui vient en contact avec le siège de soupape (2a) ou s'éloigne de celui-ci, et
dans laquelle un corps élastique (45) ayant une forme annulaire est agencé de manière à entourer une circonférence du siège de soupape (2a), et une partie de contact qui vient en contact avec le corps élastique (45) ou s'éloigne de celui-ci est agencée sur le corps principal de soupape (2),
dans laquelle la partie d'élément de soupape (42) est agencée à l'intérieur d'une partie d'évidement (41c) dirigée vers le côté du siège de soupape de la tige de soupape (41),
**caractérisée en ce que**
un élément de retenue (43) configuré pour empêcher la partie d'élément de soupape (42) d'être extraite de l'intérieur de la partie d'évidement (41c) est disposé dans la partie d'évidement (41c),
et une première partie de circonférence intérieure (41d) qui est agrandie en termes de diamètre et une seconde partie de circonférence intérieure (41e) ayant un plus grand diamètre que la première partie de circonférence intérieure (41d) sont formées sur un côté d'extrémité inférieure de la partie d'évidement (41c),
dans laquelle le corps élastique (45) est disposé sur la tige de soupape (41) dans un espace annulaire formé entre une circonférence extérieure de l'élément de retenue (43) et une circonférence intérieure de la seconde partie de circonférence intérieure (41e).

2. Soupape à commande électrique selon la revendication 1,
dans laquelle une partie de saillie (2) ayant une forme annulaire servant de partie de contact est formée sur le corps principal de soupape (2).

3. Soupape à commande électrique selon la revendication 1, comportant en outre
un ressort hélicoïdal (44) configuré pour pousser la partie d'élément de soupape (42) dans une direction allant vers le siège de soupape (2a) par rapport à la tige de soupape (41).

4. Soupape à commande électrique (1) selon la revendication 1,
dans laquelle, dans un état où la tige de soupape (41) se déplace dans une direction de séparation du siège de soupape (2a), la partie d'élément de soupape (42) se sépare du siège de soupape (2a) après que le corps élastique (45) a été séparé de la partie de contact.

5. Soupape à commande électrique (1) selon la revendication 4,
dans laquelle, après que la partie d'élément de soupape (42) a été séparée du siège de soupape (2a), du fluide s'écoulant à travers un espace formé entre la partie d'élément de soupape (42) et le siège de soupape (2a) est commandé en fonction d'une position de la tige de soupape (41) dans la direction axiale.
